# EUROPEAN PATENT SPECIFICATION

(11) **EP 2 599 829 B1**
(45) Date of publication and mention of the grant of the patent: **24.09.2014**
(21) Application number: 11191159.0
(22) Date of filing: 29.11.2011
(51) Int. Cl.: C08L 23/10, C08L 23/12

(54) **Polyolefin composition with reduced occurrence of flow marks**
Polyolefinzusammensetzung mit reduziertem Auftreten von makelloser Oberfläche
Composition de polyoléfine à l'apparition des lignes de coulee réduite

(43) Date of publication of application: 05.06.2013
(73) Proprietor: Borealis AG, 1220 Vienna (AT)
(72) Inventor: Tranninger, Michael, 4055 Pucking (AT)
(74) Representative: Haggenmüller, Christian

(56) References cited:
- EP-A1- 1 236 769
- EP-A1- 2 036 947
- WO-A1-2010/142540
- US-A1- 2009 156 773
- US-A1- 2009 171 001

## Description

The invention relates to a novel polyolefin composition having a reduced occurrence of flow marks. More particularly, the invention relates to a polyolefin composition which comprises a heterophasic polypropylene composition, ethylene/propylene elastomer and an inorganic filler.

The polyolefin compositions of the present invention are especially useful for automotive applications, in particular for automotive exterior parts, which require a good balance of impact strength and stiffness, e.g. bumpers, which further require "Class A" surface properties and low thermal expansion.

### Background of the invention

Modem polymer materials for exterior automotive parts are often comprised of blends of polypropylene resins. Polypropylene resins are normally crystalline and have low impact resistance, especially at low temperatures. To improve the impact resistance, polypropylene can be blended with polyethylene or ethylene copolymers and rubber-like material, such as polyisobutylene, polybutadiene or ethylene-α-olefin based copolymers.

Normally the resins are then injection moulded into the desired articles. If the articles are relatively large, such as for example automobile bumpers, instrument panels or centre-consoles, the problem of optical irregularities arises, due to the necessary long flow paths of the resin.

Such surface defects, which are also known as flow marks, tiger stripes or flow lines, are deteriorating the surface aesthetics since they manifest, during injection moulding, as a series of alternating high and low gloss strips perpendicular to the direction of the melt flow.

Many attempts to avoid these surface defects, while keeping a good balance of other physical properties, have been made, e.g. DE 19754061. It has however been found, that either the occurrence of flow marks could not be sufficiently prevented, or the mechanical properties of the polymer compositions were unsatisfactory.

While plastomer modified polypropylene is well established for application requiring good impact stiffness balance for automotive exterior parts, it normally shows some flow marks. The fact that there is a clear negative influence between plastomer content and flow marks limits suitability of plastomer modified polypropylene for non-painted parts. So far, it has been known that the density of the plastomer has an influence on the MFR but not on flow marks. As regards ethylene/octene elastomers as the plastomer, it is known that the lower the MFR of the ethylene/octane plastomer the better the flow mark behaviour of the material, although flow marks are still slightly visible.

There remains a need in the art to further reduce the occurrence of flow marks without compromising other properties of the composition, such as melt flow rate or flexural modulus.

### Object

It is therefore the object of the present invention to provide a polyolefin composition having a reduced tendency to flow marks and at the same time maintained properties, such as melt flow rate, flexural modulus or heat deflection temperature

Surprisingly, the above object could be achieved with polyolefin composition comprising
a. 35 - 90 wt%, based on the weight of the polyolefin composition, of a heterophasic polypropylene composition comprising
   i. 10 - 50 wt%, based on the weight of the heterophasic polypropylene composition, of a first polypropylene (PP 1) having an MFR₂ measured according to ISO 1133 of from 30 - 80 g/10 min (230 °C, 2.16 kg),
   ii. 20 - 65 wt%, based on the weight of the heterophasic polypropylene composition, of a second polypropylene (PP2) having an MFR₂ measured according to ISO 1133 of from 100 - 250 g/10 min (230 °C, 2.16 kg),
   iii. 5 - 30 wt%, based on the weight of the heterophasic polypropylene composition of a first xylene cold soluble fraction (XS 1) having an intrinsic viscosity IV_{XS1} of 2.0 - 3.0 dl/g,
   iv. 5 - 25 wt%, based on the weight of the heterophasic polypropylene composition of a second xylene cold soluble (XS2) fraction having an intrinsic viscosity IV_{XS2} of 1.5 - 2.8 dl/g,
   with the proviso that IV_{XS2} ≠ IV_{XS2},
b. 5 - 40 wt%, based on the weight of the polyolefin composition, of an inorganic filler, and
c. 5 - 25 wt%, based on the weight of the polyolefin composition, of an ethylene/propylene elastomer.

As will be shown in the examples section, the polyolefin compositions according to the invention have a very low tendency to exhibit flow marks on injection moulded specimens. The low tendency to exhibit flow marks is especially pronounced at high injection speeds.

Other important mechanical properties, like stiffness and heat deflection temperature are also on a high level, comparable with the tested comparative examples. The same is true with respect to the melt flow rate.

According to the invention, the polyolefin composition comprises 35 - 90 wt% of a heterophasic polypropylene composition. Preferably the amount of the heterophasic polypropylene composition is at least 45 wt%, more preferably at least 50 wt%, still more preferably at least 55 wt%, most preferably at least 60 wt%. Preferably the amount ofthe heterophasic polypropylene composition is not more than 85 wt%, more preferably not more than 80 wt%, still more preferably not more than 75 wt%, most preferably not more than 70 wt%.

If the amount of the heterophasic polypropylene composition is below 35 wt%, impact strength of the polyolefin composition would be reduced. If the amount of the heterophasic polypropylene composition is above 90 wt% the stiffness would be reduced.

The heterophasic polypropylene composition which is used according to the invention comprises a continuous matrix phase and a discontinuous phase.
The continuous matrix phase of the heterophasic polypropylene composition comprises two polypropylenes having different MFR₂ measured according to ISO 1133.

According to the invention, the first polypropylene (PP 1) has an MFR₂ of from 30 - 80 g/10 min (230 °C, 2.16 kg) and is present in an amount of 10 - 50 wt%, based on the weight of the heterophasic polypropylene composition

According to a more preferred embodiment, the MFR₂ of PP1 is from 35 - 75 g/10 min, still more preferable from 40 - 70 g/10 min, even more preferably from 45 - 65 g/10 min, most preferably from 50 - 60 g/10 min (230 °C, 2.16 kg).

The lower limit for the amount of PP 1 is more preferably at least 15 wt%, still more preferably at least 20 wt%, even more preferably at least 24 and most preferably at least 27 wt%, based on the weight of the heterophasic polypropylene composition.
The upper limit for the amount of PP 1 is more preferably not more than 45 wt%, still more preferably not more than 40 wt%, even more preferably not more than 36 and most preferably not more than 33 wt%, based on the weight of the heterophasic polypropylene composition.

According to the invention, the second polypropylene (PP2) has an MFR₂ of from 100 - 250 g/10 min (230 °C, 2.16 kg) and is present in an amount of 20 - 65 wt%, based on the weight of the heterophasic polypropylene composition.

According to a more preferred embodiment, the MFR₂ of PP2 is from 110 - 230 g/10 min, still more preferable from 120 - 210 g/10 min, even more preferably from 130 - 190 g/10 min, most preferably from 140 - 180 g/10 min (230 °C, 2.16 kg).

The lower limit for the amount of PP2 is more preferably at least 25 wt%, still more preferably at least 30 wt%, even more preferably at least 34 wt% and most preferably at least 38 wt%, based on the weight of the heterophasic polypropylene composition.

The upper limit for the amount of PP2 is more preferably not more than 60 wt%, still more preferably not more than 55 wt%, even more preferably not more than 51 wt% and most preferably not more than 47 wt%, based on the weight of the heterophasic polypropylene composition.

The specific selection of two polypropylenes with different MFR₂ ensures that on the one hand the overall polyolefin composition has the required stiffness, to which the polypropylene with the lower MFR₂ contributes and that it simultaneously has a high flowability, which is helped by the polypropylene with the higher MFR₂.

If the amount of PP 1 is below 10 wt% or the amount of PP2 is above 65 wt%, based on the weight of the heterophasic polypropylene composition, impact strength of the polyolefin composition becomes too small. If the amount of PP1 is above 50 wt% or the amount of PP2 is below 20 wt%, based on the weight of the heterophasic polypropylene composition, flowability of the polyolefin composition becomes insufficient.

The discontinuous phase of the heterophasic polypropylene composition comprises two amorphous copolymers (i.e. plastomers) with different molecular weights. In the present specification, the amorphous copolymers comprised in the discontinuous phase of the heterophasic polypropylene are also termed "rubber". In a preferred embodiment, the rubber forming the discontinuous phase of the heterophasic polypropylene composition is an ethylene/propylene rubber.

Since the major amount of a rubber is soluble in xylene (XCS content; i.e. xylene cold soluble content) at ambient temperature, the XCS content of the heterophasic polypropylene composition is related to the amount of rubber, but it is not necessarily exactly the same. For example, the rubber, e.g. an ethylene/propylene rubber may also comprise a portion with very high ethylene concentration, which is crystalline and would therefore be insoluble in cold xylene.

For the purpose of this invention, the molecular weight of an ethylene-propylene rubber is expressed as the intrinsic viscosity of a certain xylene cold soluble fraction of the heterophasic polypropylene composition.

Accordingly, the heterophasic polypropylene composition which is used according to the invention comprises a first xylene cold soluble fraction (XS1) having an intrinsic viscosity IV of 2.0 - 3.0 dl/g in an amount of 5 - 30 wt%, based on the weight of the heterophasic polypropylene composition.

According to a more preferred embodiment the lower limit of the IV of XS 1 is at least 2.1 dl/g, still more preferably at least 2.2 dl/g, even more preferably at least 2.3 dl/g and most preferable at least 2.4 dl/g.

According to a more preferred embodiment the upper limit of the IV of XS 1 is not more than 2.9 dl/g, still more preferably not more than 2.8 dl/g, even more preferably not more than 2.7 dl/g and most preferable not more than 2.6 dl/g.

The lower limit for the amount of XS 1 is more preferably at least 8 wt%, still more preferably at least 10 wt%, even more preferably at least 12 wt% and most preferably at least 14 wt%, based on the weight of the heterophasic polypropylene composition.

The upper limit for the amount of XS 1 is more preferably not more than 25 wt%, still more preferably not more than 22 wt%, even more preferably not more than 20 wt% and most preferably not more than 18 wt%, based on the weight of the heterophasic polypropylene composition.

Accordingly, the heterophasic polypropylene composition which is used according to the invention comprises a second xylene cold soluble fraction (XS2) having an intrinsic viscosity IV of 1.5 - 2.8 dl/g in an amount of 5 - 25 wt%, based on the weight of the heterophasic polypropylene composition.

According to a more preferred embodiment the lower limit of the IV of XS2 is at least 1.7 dl/g, still more preferably at least 1.8 dl/g, even more preferably at least 1.9 dl/g and most preferably at least 2.0 dl/g.

According to a more preferred embodiment the upper limit of the IV of XS2 is not more than 2.7 dl/g, still more preferably not more than 2.6 dl/g, even more preferably not more than 2.5 dl/g and most preferable not more than 2.4 dl/g.

The lower limit for the amount of XS2 is more preferably at least 7 wt%, still more preferably at least 8 wt%, even more preferably at least 9 wt% and most preferably at least 10 wt%, based on the weight of the heterophasic polypropylene composition.

The upper limit for the amount of XS2 is more preferably not more than 21 wt%, still more preferably not more than 17 wt%, even more preferably not more than 14 wt% and most preferably not more than 12 wt%, based on the weight of the heterophasic polypropylene composition.

The specific selection of rubbers, such as ethylene/propylene rubbers, and thus of first and second xylene cold soluble fractions having different molecular weights (i.e. "bimodal rubber") ensures that the overall polyolefin composition has sufficient impact strength both at ambient and at low temperatures. The presence of a bimodal rubber in the polyolefin composition also helps to reduce the occurrence of flow marks.

If the amounts of XS 1 and XS2 are lower than described above, the impact strength of the polyolefin composition is unsatisfactory. If the amounts of XS 1 and XS2 are higher than described above, the stiffness of the polyolefin composition is unsatisfactory.

As already mentioned above, the molecular weights of both rubbers are different from each other. Accordingly, it is required that IV of XS 1 is not equal to IV of XS2. More preferably IV_{XS1} > IV_{XS2}, still more preferably IV_{XS1} > IV_{XS2} + 0.1, most preferably IV_{XS1} > IV_{XS2} + 0.2.

According to an embodiment of the present invention, the first and the second xylene cold soluble fractions are not present in the same amount. It is therefore preferred that the amount of XS 1 is larger than the amount of XS2, more preferably the amount of XS 1 is larger than the amount of XS2 by more than 2 wt%, still more preferably by more than 3 wt%, most preferably by more than 4 wt%, in each case based on the weight of the heterophasic polypropylene composition.

A further parameter, which is useful to fine tune the properties of the polyolefin composition of the present invention is the ethylene content of the xylene cold soluble fractions XS 1 + XS2 of the heterophasic polypropylene composition.. Accordingly, the ethylene content of the xylene cold soluble fractions of the heterophasic polypropylene composition is in the range of from 20 - 50 wt%, preferably 25 - 45 wt%, more preferably 30 - 45 wt%, most preferably 32 - 42 wt%.

According to a further embodiment of the present invention, the ethylene content of the xylene cold soluble fraction XS1 is comparable to the ethylene content of the xylene cold soluble fraction XS2. Accordingly the ethylene content of XS 1 is between 80 - 120 % of the ethylene content of XS2, more preferably the ethylene content of XS 1 is between 90 - 110 % of the ethylene content of XS2, still more preferably the ethylene content of XS 1 is between 95 - 105 % of the ethylene content of XS2 and most preferably the ethylene content of XS 1 equal to the ethylene content of XS2.

According to a further embodiment of the present invention the first and second polypropylene are not present in the same amount. Accordingly, it is preferred that the amount of PP2 is larger than the amount of PP1, more preferably the amount of PP2 is larger than the amount of PP 1 by more than 4 wt%, still more preferably by more than 7 wt%, still more preferably by more than 10 wt%, in each case based on the weight of the heterophasic polypropylene composition.

According to advantageous embodiment of the invention, the heterophasic polypropylene composition is comprised of 45 - 90 wt% of polypropylenes PP1 and PP2 and 10 - 55 wt% of xylene soluble fractions XS1 and XS2. Preferably the amount of polypropylenes is 50 - 85 wt%, more preferably 55- 80 wt%, still more preferably 60 - 75 wt%. Accordingly, the preferred amount of xylene soluble fraction is 15 - 50 wt%, more preferably 20 - 45 wt%, still more preferably 25 - 40 wt%.

A carefully selected ratio of polypropylenes to xylene soluble fractions contributes to the impact strength of the polyolefin composition and also to shrinkage behaviour.

In order to reach the desired level of stiffness and CLTE, the polyolefin composition of the invention comprises inorganic filler in a selected amount. Accordingly, the polyolefin composition according to the present invention comprises inorganic filler in an amount of from 5 - 40 wt%.

The lower limit for the amount of inorganic filler is more preferably at least 10 wt%, still more preferably at least 13 wt%, even more preferably at least 16 wt% and most preferably at least 18 wt%, based on the weight of the polyolefin composition.

The upper limit for the amount of inorganic filler is more preferably not more than 35 wt%, still more preferably not more than 30 wt%, even more preferably not more than 26 wt% and most preferably not more than 22 wt%, based on the weight of the polyolefin composition

If the amount of inorganic filler is above 40 wt%, the polyolefin composition does not have the necessary flowability and not the required impact strength. Also, occurrence of flow marks would be too high. If the amount of inorganic filler is below 5 wt%, its contribution to stiffness would be too low.

The polyolefin composition according to the invention further comprises an ethylene/propylene elastomer in an amount of from 5 - 25 wt based on the weight of the polyolefin composition. It is usual to add ethylene/a-olefin elastomers to heterophasic polypropylene compositions in order to enhance their impact strength.

It has now surprisingly been found, that when an ethylene/propylene elastomer as a specific ethylene/a-olefin elastomer is added to a heterophasic polypropylene composition which has a bimodal polypropylene matrix, a bimodal ethylene-propylene rubber discontinuous phase and which contains an inorganic filler, the occurrence of flow marks can be significantly reduced (compared to an addition of, e.g., an ethylene/1-butylene elastomer).

The lower limit for the amount of ethylene/propylene elastomer is more preferably at least 7 wt%, still more preferably at least 8wt%, even more preferably at least 9 wt% and most preferably at least 10 wt%, based on the weight of the polyolefin composition.

The upper limit for the amount of ethylene/propylene elastomer is more preferably not more than 22 wt%, still more preferably not more than 19 wt%, even more preferably not more than 16 wt% and most preferably not more than 14 wt%, based on the weight of the polyolefin composition.

According to an embodiment of the present invention, the ethylene/propylene elastomer has a density of from 865 to 881 kg/m³, preferably 870 to 876 kg/m³.

In a further preferred embodiment, the ethylene/propylene elastomer has a polydispersity index (PDI), which is the ratio of the weight average molecular weight (Mw) to the number average molecular weight (Mn), of more than 6, preferably more than 7, most preferably more than 8.

Generally, in ethylene/a-olefin elastomers the density correlates with the a-olefin content with higher densities generally meaning lower α-olefin contents.

Accordingly, the lower limit for the density of the ethylene/propylene elastomer is more preferably at least 884 kg/m³, still more preferably at least 881 kg/m³, even more preferably at least 878 kg/m³ and most preferably at least 875 kg/m³.

The upper limit for the density of the ethylene/propylene elastomer is more preferably not more than 876 kg/m³, still more preferably not more than 872 kg/m³, even more preferably not more than 869 kg/m³ and most preferably not more than 867 kg/m³.

The MFR of the ethylene/propylene elastomer which is used for the present invention is preferably selected - together with further properties described herein - to fine tune the impact properties of the polyolefin composition.

An advantageous MFR range for the ethylene/propylene elastomer has been found to be from 1-7 g/10 min (230 °C, 2,16 kg).

The lower limit for the MFR of the ethylene/propylene elastomer is more preferably at least 1 g/10 min, still more preferably at least 1,5 g/10 min.

A more preferred upper limit for the MFR of the ethylene/propylene elastomer is 7 g/10 min, still more preferably 6,5 g/10 min.

According to a preferred embodiment of the present invention, the inorganic filler is selected from the group consisting of talc and wollastonite.

According to a preferred embodiment of the present invention, the inorganic filler, which is used for the polyolefin composition has a median particle size (D₅₀) of 0.5 - 15 µm and a top cut (D₉₅) of 1 - 50 µm.

With D₅₀ > 15 µm and a top cut > 50 µm, the reinforcing effect of the inorganic filler becomes too small. With D₅₀ < 0.5 µm and a top cut < 1 µm, too many of the filler particles would be in the nanoscale range, which means that the energy which is required for a homogeneous distribution of the filler particles in the polyolefin becomes unfavourably large.

The median particle size D₅₀ is clearly defined, however, which fraction is used to define the top cut depends on the producer of the inorganic filler. A usual method for measuring particle size distribution is a laser diffraction method. Usual fractions defining the top cut of an inorganic filler are D₉₅, D₉₇ and D₉₈. For the present invention, the fraction D₉₅ is preferred for defining top cut.

An alternative way for defining top cut is to specify the fraction of filler particles having a diameter above a certain limit, i.e. the so-called screen residue. According to this, it is preferred for the present invention that the amount of filler particles having a particle size of > 15 µm to be not more than 5, more preferably not more than 3, still more preferably not more than 2 wt% based on total amount of filler, even more preferably not more than 1 wt% based on total amount of filler. According to a particularly preferred embodiment the amount of filler particles having a particle size of > 15 µm shall not be more than 0.05 wt% based on total amount of filler.

According to a still further preferred embodiment, the inorganic filler is talc. According to a particularly preferred embodiment, the inorganic filler, which is used for the polyolefin composition of the present invention is talc which has a median particle size D₅₀ of 0.8 - 12 µm and a top cut (D₉₅) of 1.0 - 40 µm, still more preferred D₅₀ of 2.0 - 10 µm and top cut of 2 - 30 µm, most preferred D₅₀ of 1 - 5 µm and top cut (D₉₅) of 2 - 10 µm.

The MFR of the polyolefin composition can be selected to give optimum processability while maintaining all other desired properties. The MFR of the polyolefin composition is further selected such that it is suitable for a range of applications, particularly for moulding applications, especially injection moulding.

Accordingly, the MFR ofthe polyolefin composition is from 5 - 50 g/10 min. Preferably, the MFR of the heterophasic propylene copolymer is 8 - 50 g/10 min, more preferably 10 - 40 g/10 min, still more preferably 13 - 30g/10 min, most preferably 16 - 25 g/10 min.

According to an embodiment of the present invention, the polyolefin composition comprises at least one alpha-nucleating agent.

Generally, nucleating agents promote the formation of crystallization nuclei when a melt of polypropylene is solidified and are thus increasing the crystallization speed and temperature of nucleated polypropylene compared to non-nucleated polypropylene.

Polypropylene containing alpha nucleating agents shows improved mechanical properties, particularly stiffness, but also HDT.

The polyolefin composition further contains up to 2 wt% of at least one alpha-nucleating agent. A lower limit of 0.001 wt% of alpha-nucleating agent is preferred. Preferably the polyolefin composition comprises 0.005 to 0.5 wt%, more preferably 0.01 to 0.3 wt%, most preferably 0.04 - 0.15 wt% of at least one alpha-nucleating agent.

Smaller amounts of alpha-nucleating agent than 0.001 wt% usually do not give the desired level of effect, while with larger amounts than 2 wt%, although giving the desired effect, the polyolefin compositions are becoming too expensive because of the high priced nucleating agents.

The alpha-nucleating agents which may be used for the polyolefin composition of the invention include organic alpha-nucleating agents selected from the group of phosphorous based nucleating agents like phosphoric acid esters metal salts represented by formula I 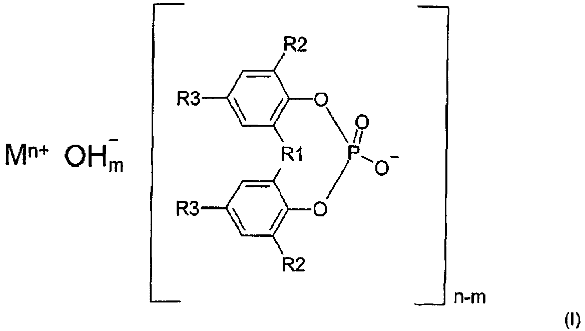 wherein R1 is oxygen, sulphur or a hydrocarbon group of 1 to 10 carbon atoms; each of R2 and R3 is hydrogen or a hydrocarbon or a hydrocarbon group of 1 to 10 carbon atoms; R2 and R3 may be the same or different from each other, two of R2, two of R3, or R2 and R3 may be bonded together to form a ring, M is a monovalent to trivalent metal atom; n is an integer from 1 to 3 and m is either 0 or 1, provided that n > m.

Preferred examples of the alpha nucleating agents represented by the above formula include sodium-2,2'-methylene-bis(4,6-di-t-butyl-phenyl)phosphate, sodium-2,2'-ethylidene-bis(4,6-di-t-butylphenyl)-phos-phate, lithium-2,2'-methylene-bis(4,6-di-t-butylphenyl)phosphate, lithium-2,2'-ethylidene-bis(4,6-di-t-butylphenyl)phosphate, sodium-2,2'-ethyli-dene-bis(4-i-propyl-6-t-butylphenyl)phosphate, lithium-2,2'-methylene-bis(4-methyl-6-t-butylphenyl)phosphate, lithium-2,2'-methylene-bis(4-ethyl-6-t-butylphenyl)phosphate, calcium-bis[2,2'-thiobis(4-methyl-6-t-butylphenyl)-phosphate], calcium-bis[2,2'-thiobis(4-ethyl-6-t-butylphenyl)-phosphate], calcium-bis[2,2'-thiobis(4,6-di-t-butylphenyl)phosphate], magnesium-bis[2,2'-thiobis(4,6-di-t-butylphenyl)phosphate], magnesium-bis[2,2'-thiobis(4-t-octylphenyl)phosphate], sodium-2,2'-butylidene-bis(4,6-dimethylphenyl)phosphate, sodium-2,2'-butylidene-bis(4,6-di-t-butyl-phenyl)-phosphate, sodium-2,2'-t-octylmethylene-bis(4,6-dimethyl-phenyl)-phosphate, sodium-2,2'-t-octylmethylene-bis(4,6-di-t-butylphenyl)-phos-phate, calcium-bis[2,2'-methylene-bis(4,6-di-t-butylphenyl)-phosphate], magnesium-bis[2,2'-methylene-bis(4,6-di-t-butylphenyl)-phosphate], barium-bis[2,2'-methylene-bis(4,6-di-t-butylphenyl)-phosphate], sodium-2,2'-methylene-bis(4-methyl-6-t-butylphenyl)-phosphate, sodium-2,2'-methy-lene-bis(4-ethyl-6-t-butylphenyl)phosphate, sodium(4,4'-dimethyl-5,6'-di-t-butyl-2,2'-biphenyl)phosphate, calcium-bis-[(4,4'-dimethyl-6,6'-di-t-butyl-2,2'-biphenyl)phosphate], sodium-2,2'-ethyli-dene-bis(4-m-butyl-6-t-butylphenyl)phosphate, sodium-2,2'-methylene-bis-(4,6-di-methylphenyl)-phos-phate, sodium-2,2'-methylene-bis(4,6-di-t-ethyl-phenyl)phosphate, potassium-2,2'-ethylidene-bis(4,6-di-t-butylphenyl)-phosphate, calcium-bis[2,2'-ethylidene-bis(4,6-di-t-butylphenyl)-phosphate], magnesium-bis[2,2'-ethyli-dene-bis(4,6-di-t-butylphenyl)-phosphate], barium-bis[2,2'-ethylidene-bis-(4,6-di-t-butylphenyl)-phosphate], aluminium-hydroxy-bis[2,2'-methylene-bis(4,6-di-t-butylphenyl)phosphate], aluminium-tris[2,2'-ethylidene-bis(4,6-di-t-butylphenyl)-phosphate].

A second group of phosphorous based nucleating agents includes for example aluminium-hydroxy-bis[2,4,8,10-tetrakis(1,1-dimethylethyl)-6-hydroxy-12H-dibenzo-[d,g]-dioxa-phoshocin-6-oxidato] and blends thereof with Li-myristate or Li-stearate.

Of the phosphorous based nucleating agents sodium-2,2'-methylene-bis(4,6-di-t-butylphenyl)phosphate or aluminium-hydroxy-bis[2,2'-methy-lene-bis(4,6-di-t-butyl-phenyl)-phosphate] or aluminium-hydroxy-bis-[2,4,8,10-tetrakis(1,1-dimethylethyl)-6-hydroxy-12H-dibenzo-[d,g]-dioxa-phoshocin-6-oxidato] or blends thereof with Li-myristate or Li-stearate are especially preferred.

Also sorbitol-based nucleating agents, like optionally substituted dibenzylidine sorbitol (e.g. 1,3 : 2,4 Dibenzylidene sorbitol, 1,3 : 2,4 Di(methylbenzylidene) sorbitol 1,3 : 2,4 Di(ethylbenzylidene) sorbitol, 1,3 : 2,4 Bis(3,4-dimethylbenzylidene) sorbitol) or pine rosin can be used as nucleating agents.

Further suitable alpha-nucleating agents are polymeric nucleating agents selected from the group consisting of vinylcycloalkane polymers and vinylalkane polymers. Nucleation with these polymeric nucleating agents is either accomplished by a special reactor technique, where the catalyst is prepolymerised with monomers like e.g. vinylcyclohexane (VCH), or by blending the propylene polymer with the vinyl(cyclo)alkane polymer. These methods are described in greater detail in e.g. EP 0 316 187 A2 and WO 99/24479.

Suitable alpha-nucleating agents for the polyolefin composition of the invention are in addition nucleating agents, as described for example in Macromolecules 2005, 38, 3688-3695.

Nucleating agents such as ADK NA-11 (Methylen-bis(4,6-di-t-butylphenyl)phosphate sodium salt) and ADK NA-21 (comprising aluminium hydroxy-bis[2,4,8,10-tetrakis(1,1-dimethylethyl)-6-hydroxy-12H-dibenzo-[d,g]-dioxa-phoshocin-6-oxidato]) are commercially available from Asahi Denka Kokai and are among those which are preferably added to the polyolefin composition of the invention. Millad 3988 (3,4-Dimethylbenzylidene sorbitol), Millad 3905 and Millad 3940 available from Milliken & Company are other examples of nucleating agents that can be utilised in the invention.

Further commercial available alpha-nucleating agents, which can be used for the composition of the invention are, for example, Irgaclear XT 386 (N-[3,5-bis-(2,2-dimethyl-propionylamino)-phenyl]-2,2-dimethylpropionamide) from Ciba Speciality Chemicals, Hyperform HPN-68L and Hyperform HPN-20E from Milliken & Company.

Among all alpha-nucleating agents mentioned above, aluminium hydroxy-bis[2,4,8,10-tetrakis(1,1-dimethylethyl)-6-hydroxy-12H-dibenzo-[d,g]-dioxaphoshocin-6-oxidato] based nucleating agents like ADK NA-21, NA-21 E, NA-21 F, sodium-2,2'-methylene-bis(4,6-di-t-butylphenyl)phosphate (ADK NA-11), aluminium-hydroxy-bis[2,2'-methylene-bis(4,6-di-t-butyl-phenyl)-phosphate], sorbitol-based nucleating agents like Millad 3988, Millad 3905 and Millad 3940 and polymeric nucleating agents selected from the group consisting of vinylcycloalkane polymers and vinylalkane polymers are particularly preferred.

According to an embodiment of the present invention, the at least one alpha-nucleating agent is comprised of a polymeric nucleating agent selected from the group consisting of vinylcycloalkane polymers and vinylalkane polymers, preferably poly-vinylcyclohexane (pVCH).

According to a further embodiment the at least one alpha-nucleating agent is selected from the group consisting of aluminium hydroxy-bis[2,4,8,10-tetrakis(1,1-dimethylethyl)-6-hydroxy-12H-dibenzo-[d,g]-dioxa-phoshocin-6-oxidato] based nucleating agents (e.g. ADK NA-21, NA-21 E, NA-21 F), sodium-2,2'-methylene-bis(4,6-di-t-butylphenyl)phosphate (ADK NA-11), aluminium-hydroxy-bis[2,2'-methylene-bis(4,6-di-t-butyl-phenyl)-phosphate] and sorbitol-based nucleating agents (e.g. Millad 3988, Millad 3905 and Millad 3940).

For the embodiment where the at least one alpha-nucleating agent is selected from the group consisting of vinylcycloalkane polymers and vinylalkane polymers, preferably poly-vinylcyclohexane (pVCH), the typical concentration of vinyl(cyclo)alkane polymer in the polyolefin composition is from 0.0001 - 1.0 wt%, preferably 0.0001 - 0.1 wt%, more preferably 0.001 - 0.05 wt%, most preferably 0.001 - 0.01 wt%.

For the embodiment, where the at least one alpha nucleating agent is not a polymeric nucleating agent, the nucleating agent is typically present in the polyolefin composition in an amount of from 0.001 - 1.0 wt%, preferably 0.001 - 0.5 wt%, more preferably 0.01 - 0.5 wt%, most preferably 0.01 - 0.3 wt%.

The polyolefin compositions which are used for the invention may contain various additives, which are generally used in polypropylene compositions, such as stabilizers, antioxidants, acid neutralizing agents, lubricants, ultraviolet absorbers, pigments, provided that they do not adversely affect the desired properties of the composition.

It is accordingly preferred, that the additives shall be not more than 10.0 wt%, preferably not more than 8.0 wt%, more preferably not more than 5.0 wt%, yet more preferably not more than 4.0 wt%, still more preferably not more than 3.0 wt%, in the total polyolefin composition.

The polyolefin compositions of the present invention are suitable for a wide range of applications.
They are particularly suitable for the production of moulded articles, in particular for the production of injection moulded articles. Preferred examples of such injection moulded articles are large parts for exterior applications in the automotive industry, in particular body panels.

Accordingly, a further aspect of the invention is a moulded article comprising a polyolefin composition as herein described. A still further aspect ofthe invention is an injection moulded article comprising a polyolefin composition as herein described.

Compared to other polyolefin compositions, which are today used for similar or the same applications, the inventive polyolefin compositions have a unique balance of properties. They typically have little or no occurrence of flow marks. Also stiffness (Flexural modulus > 1700 MPa) and HDT B (> 100 °C) are typically on a high level.

### Description of heterophasic polypropylene composition

A heterophasic polypropylene composition being utilized according to the invention has preferably a multiphase structure with a continuous polypropylene matrix and inclusions comprising at least two amorphous ethylene-propylene rubbers, which is an elastomeric phase. The polymer matrix comprises the polypropylenes PP 1 and PP2. Optionally, the rubber also comprises some crystalline polyethylene.

Preferably each of the polypropylene(s) is isotactic. The isotacticity of polypropylene is determined by ¹³C-NMR as triade percentage (mm%). Accordingly it is appreciated that the polypropylene has a rather high triad percentage, i.e. higher than 90 %, more preferably higher than 92 %, still more preferably higher than 93 %, even more preferably higher than 95 % and most preferably higher than 98 %.

Additionally it is appreciated that the polypropylene(s) (PP1 and/or PP2) as well as the total heterophasic polypropylene composition are not chemically modified as it is known for instance from high melt strength polymers (HMS-polymer). Thus the heterophasic polypropylene composition and/or the polypropylene(s) (PP 1 and/or PP2) are not cross-linked. The impact behaviour can normally also be improved by using branched polypropylenes as for instance described in EP 0 787 750, i.e. single branched polypropylene types (Y-polypropylenes having a backbone with a single long side-chain and an architecture resembling a "Y"). Such polypropylenes are characterized by rather high melt strength. A parameter of the degree of branching is the branching index g'. The branching index g' correlates with the amount of branches of a polymer. The branching index g' is defined as g'=[IV]_{br}/[IV]ₗᵢₙ in which g' is the branching index, [IV_{br]} is the intrinsic viscosity of the branched polypropylene and [IV]ₗᵢₙ is the intrinsic viscosity of the linear polypropylene having the same weight average molecular weight (within a range of ±10 %) as the branched polypropylene. Thereby, a low g'-value is an indicator for a high branched polymer. In other words, if the g'-value decreases, the branching of the polypropylene increases. Reference is made in this context to B.H. Zimm and W.H. Stockmeyer, J. Chem. Phys. 17,1301 (1949). This document is herewith included by reference. Thus it is preferred that the branching index g' of the polypropylene(s) (PP 1 and/or PP2) shall be at least 0.85, more preferably at least 0.90, yet more preferably at least 0.95, like 1.00.

Further the present polyolefin composition may comprise additional polymer components other than the heterophasic polypropylene composition and ethylene/propylene elastomer. However the present invention is in particular directed to a polyolefin composition where the heterophasic polypropylene composition and the ethylene/propylene elastomer together account for at least 90.0 wt% of all polymeric components of the polyolefin composition, preferably at least 93.0 wt%, more preferably at least 95.0 wt%, yet preferably at least 97.0 wt%, still more preferably at least 98.0 wt% of all polymeric components of the polyolefin composition.

The first and/or second polypropylene (PP 1 and/or PP2) of the heterophasic polypropylene composition may comprise apart from propylene also comonomers. Preferably, first and/or second polypropylene (PP1 and/or PP2) comprise apart from propylene ethylene and/or C₄ to C₁₂ α-olefins. Accordingly, the term "polypropylene" according to this invention is understood as a polypropylene comprising, preferably consisting of, units derivable from
(a) propylene
   and
(b) ethylene and/or C₄ to C₁₂ α-olefins.

Thus the first and/or second polypropylene (PP1 and/or PP2) according to this invention, i.e. the, the random propylene copolymer fractions of the matrix, comprise monomers copolymerizable with propylene, for example comonomers such as ethylene and/or C₄ to C₁₂ α-olefms, in particular ethylene and/or C₄ to C₈ α-olefins, e.g. 1-butene and/or 1-hexene. Preferably the first and/or second polypropylene (PP1 and/or PP2) according to this invention comprise, especially consist of, monomers copolymerizable with propylene from the group consisting of ethylene, 1-butene and 1-hexene. More specifically the first and/or second polypropylene (PP1 1 and/or PP2) of this invention comprise - apart from propylene - units derivable from ethylene and/or 1-butene. In a preferred embodiment the first and/or second polypropylene (PP1 and/or PP2) according to this invention comprise units derivable from ethylene and propylene only. Still more preferably, the random propylene copolymer fractions of the matrix - if present - contain the same comonomers, like ethylene.

Accordingly, the first and/or second polypropylene (PP1 and/or PP2) is either a random propylene copolymer (R-PP 1 and/or R-PP2) or a propylene homopolymer (H-PP 1 and/or H-PP2)), the latter being preferred. Thus, in a preferred embodiment, the first polypropylene (PP1) is a random propylene copolymer as defined above (R-PP1), or a propylene homopolymer (H-PP1). More preferably, the first polypropylene (PP1) is a propylene homopolymer (H-PP1). In another preferred embodiment, the second polypropylene (PP2) is a random propylene copolymer as defined above (R-PP2), or a propylene homopolymer (H-PP2). More preferably, the second polypropylene (PP2) is a propylene homopolymer (H-PP2). In a further preferred embodiment, the first polypropylene (PP1) and the second polypropylene (PP2) are both propylene homopolymers.

The expression propylene homopolymer as used above relates to a polypropylene that consists substantially, i.e. of at least 97 wt%, preferably of at least 98 wt%, more preferably of at least 99 wt%, still more preferably of at least 99.8 wt% of propylene units. In a preferred embodiment only propylene units in the propylene homopolymer are detectable. The comonomer content can be determined with FT infrared spectroscopy, as described below in the examples.

Each polypropylene can be unimodal or multimodal, like bimodal in view of the molecular weight distribution, or comonomer content.

The expression "multimodal" or "bimodal" used herein with respect to the molecular weight distribution refers to the modality of the polymer, i.e.
■ the form of its molecular weight distribution curve, which is the graph of the molecular weight fraction as a function of its molecular weight.

As will be explained below, a polypropylen can be produced in a single step or in a sequential step process, using reactors in serial or parallel configuration and which can be operated at different reaction conditions, optionally with addition of comonomers as defined above. As a consequence, each fraction prepared in a specific reactor can have its own molecular weight distribution and/or comonomer content.

When the distribution curves from these fractions are superimposed to obtain the molecular weight distribution curve of the final polymer, these curves may show two or more maxima or at least be distinctly broadened when compared with curves for the individual fractions. The same is true for the comonomer content. Such a polymer, produced in two or more serial or parallel steps, is called bimodal or multimodal, depending on the number of steps.

Accordingly, the polypropylenes may be bimodal or multimodal in view of the molecular weight and/or the comonomer content. The propylene homopolymer may be multimodal or bimodal in view of the molecular weight.

As a further requirement of the present invention the heterophasic propylene copolymer must comprise an ethylene-propylene rubber.

Like the polypropylene, the elastomeric ethylene-propylene rubber can be unimodal or multimodal, like bimodal. However it is preferred that the ethylene/propylene rubber is unimodal. Concerning the definition of unimodal and multimodal, like bimodal, it is referred to the definition above.

According to the present invention, there is also provided a process for the manufacture of the polyolefin composition discussed above. The ethylene-propylene rubber(s) may be blended with the polypropylene(s) after their respective polymerizations and are subsequently mixed with the ethylene/propylene elastomer and the inorganic filler and the optional alpha-nucleating agent. In an alternative method, a heterophasic polypropylene composition is produced in a multistage process, comprising at least four consecutive reactors and subsequently mixed with the ethylene/propylene elastomer and the inorganic filler and the optional alpha-nucleating agent.

However, more desirably, two heterophasic propylene copolymers are produced in separate multistage processes and subsequently mixed with the ethylene/propylene elastomer and the inorganic filler and the optional alpha-nucleating agent.

In a particularly preferred embodiment a polypropylene PP1 is produced in at least one slurry reactor or a slurry and a gas phase reactor and subsequently an ethylene-propylene-rubber is produced in at least one gas phase reactor to obtain a first heterophasic propylene copolymer. Further, a polypropylene PP2 is produced in at least one slurry reactor or a slurry and a gas phase reactor and subsequently an ethylene-propylene-rubber is produced in at least one gas phase reactor to obtain a second heterophasic propylene copolymer.

Accordingly each heterophasic propylene copolymer of the instant invention can be typically produced in a cascade of up to 4 reactors, where the first reactor is a liquid bulk reactor preferably of loop design, the second reactor is either a liquid bulk reactor preferably of loop design or a gas phase reactor and all subsequent reactors are gas phase reactors preferably of fluidized bed design. The components produced in the first two reactors is(are) crystallizable polypropylener(s), while the component produced in the third and/or fourth reactor is a largely amorphous copolymer with higher amounts of comonomer. According to a specific embodiment, only three reactors are utilized with either two reactors producing polypropylene and the third reactor producing ethylene/propylene rubber or with one reactor producing polypropylene and two subsequent reactors producing ethylene/propylene rubber. According to another specific embodiment, only two reactors are used, one producing polypropylene and the second producing ethylene-propylene rubber.

In the following a preferred process is described in more detail: Such a process for the manufacture of the present invention comprises the following steps:
(i) polymerizing propylene, optionally in the presence of comonomers, in a first reactor system, preferably comprising a bulk loop reactor and an optional gas phase reactor, to obtain a polypropylene PP1
(ii) transferring the obtained polypropylene PP1 into a second reactor system preferably comprising at least one gas phase reactor,
(iii) polymerizing propylene and ethylene in said second reactor system in the presence of the polypropylene PP1 to produce an ethylene-propylene rubber XS1 and to obtain a first heterophasic propylene copolymer containing PP 1 and XS 1, and - independently from process steps (i) to (iii)
(iv) polymerizing propylene, optionally in the presence of comonomers in a third reactor system, preferably comprising a bulk loop reactor and an optional gas phase reactor, to obtain a polypropylene PP2
(v) transferring the obtained polypropylene PP2 into a fourth reactor system preferably comprising at least one gas phase reactor,
(vi) polymerizing propylene and ethylene in said fourth reactor system in the presence of the polypropylene PP2 to produce an ethylene-propylene rubber XS2 and to obtain a second heterophasic propylene copolymer containing PP2 and XS2, and
(vii) mixing, in particular melt mixing, the obtained first and second heterophasic propylene copolymers with ethylene/propylene elastomer and inorganic filler.

The comonomer feeds into the various reactors may be adapted to produce the heterophasic propylene copolymer with the desired properties and the amounts of comonomer will be readily determined by the person skilled in the art.

Further details concerning the manufacture of heterophasic propylene copolymers (HECO) can be derived from WO 97/40080.

In such a procedure, the catalyst system used may be varied between stages but is preferably the same for all stages. Especially preferably a prepolymerized heterogeneous catalyst is used.

As a catalyst for the preparation of the heterophasic propylene copolymer preferably a Ziegler-Natta catalyst system is used. Such Ziegler-Natta catalyst systems are known in the art and comprise a catalyst component, a cocatalyst component and an external donor. The catalyst component of the catalyst system primarily contains magnesium, titanium, halogen and an internal donor. Electron donors control the stereospecific properties and/or improve the activity of the catalyst system. A number of electron donors including ethers, esters, polysilanes, polysiloxanes, and alkoxysilanes are known in the art.

The catalyst preferably contains a transition metal compound as a procatalyst component. The transition metal compound is selected from the group consisting of titanium compounds having an oxidation degree of 3 or 4, vanadium compounds, zirconium compounds, cobalt compounds, nickel compounds, tungsten compounds and rare earth metal compounds, titanium trichloride and titanium tetrachloride being particularly preferred.

It is preferred to use catalysts which can withstand the high temperatures prevailing in the loop reactor. The conventional Ziegler-Natta catalysts for isotactic polymerization of propylene generally have an operating temperature limit of around 80 °C, above which they either become deactivated or lose their stereo-selectivity. This low polymerization temperature may put a practical limit on the heat removal efficiency of the loop reactor.

One preferred catalyst to be used according to the invention is disclosed in EP 591 224 which discloses a method for preparing a procatalyst composition from magnesium dichloride, a titanium compound, a lower alcohol and an ester of phthalic acid containing at least five carbon atoms. According to EP 591 224 , a transesterification reaction is carried out at an elevated temperature between the lower alcohol and the phthalic acid ester, whereby the ester groups from the lower alcohol and the phthalic ester change places.

Magnesium dichloride can be used as such or it can be combined with silica, e.g. by absorbing the silica with a solution or slurry containing magnesium dichloride. The lower alcohol used may be preferably methanol or ethanol, particularly ethanol.

The titanium compound used in the preparation of the procatalyst is preferably an organic or inorganic titanium compound, which is at the oxidation state of 3 or 4. Also other transition metal compounds, such as vanadium, zirconium, chromium, molybdenum and tungsten compounds can be mixed with the titanium compound. The titanium compound usually is a halide or oxyhalide, an organic metal halide, or a purely metal organic compound in which only organic ligands have been attached to the transition metal. Particularly preferred are the titanium halides, especially titanium tetrachloride.

The alkoxy group of the phthalic acid ester used comprises at least five carbon atoms, preferably at least eight carbon atoms. Thus, as the ester may be used e.g. propylhexyl phthalate, dioctyl phthalate, di-isodecyl phthalate and ditridecyl phthalate. The molar ratio of phthalic acid ester and magnesium halide is preferably about 0.2:1.

The transesterification can be carried out, e.g. by selecting a phthalic acid ester - a lower alcohol pair, which spontaneously or by the aid of a catalyst, which does not damage the procatalyst composition, transesterifies the catalyst at an elevated temperature. It is preferred to carry out the transesterification at a temperature which is 110 to 115 °C, preferably 120 to 140 °C.

The catalyst is used together with an organometallic cocatalyst and with an external donor. Generally, the external donor has the formula

RₙR'ₘSi(R"O)₄₋ₙ₋ₘ

wherein
R and R' can be the same or different and represent a linear, branched or cyclic aliphatic, or aromatic group;
R" is methyl or ethyl;
n is an integer of 0 to 3;
m is an integer of 0 to 3; and
n+m is 1 to 3.

In particular, the external donor is selected from the group consisting of cyclohexyl methylmethoxy silane (CHMMS), dicyclopentyl dimethoxy silane (DCPDMS), diisopropyl dimethoxy silane, di-isobutyl dimethoxy silane, and di-t-butyl dimethoxy silane.

An organoaluminium compound is used as a cocatalyst. The organoaluminium compound is preferably selected from the group consisting of trialkyl aluminium, dialkyl aluminium chloride and alkyl aluminium sesquichloride.

According to the invention, such catalysts are typically introduced into the first reactor only. The components of the catalyst can be fed into the reactor separately or simultaneously or the components of the catalyst system can be precontacted prior to the reactor.

Such precontacting can also include a catalyst prepolymerization prior to feeding into the polymerization reactor proper. In the prepolymerization, the catalyst components are contacted for a short period with a monomer before feeding to the reactor.

If the polyolefin composition comprises a polymeric nucleating agent which is accomplished by prepolymerising the catalyst with vinyl(clyclo)hexane, this is preferably also done in the catalyst prepolymerisation mentioned above.

As described above, after the manufacture of the heterophasic propylene copolymer the mixing with the ethylene/alpha-olefin and the inorganic filler and the alpha-nucleating agent(s) follows.

### Production of ethylene/α-olefin elastomer

The production of ethylene/α-olefin elastomer is described in detail in: Chum SP, Kao CI and Knight GW: Structure, properties and preparation of polyolefins produced by single-site technology. In: Metallocene-based Polyolefins - Volume 1, Scheirs J and Kaminsky W Eds, John Wiley and Sons Ltd, Chichester (West Sussex, England), 2000 pp. 262-264.

Alternatively, ethylene/propylene elastomers, which are commercially available and which fulfil the indicated requirements, can be used. Amorphous ethylene/propylene elastomers are especially preferred.

### Compounding

The heterophasic copolymers, the ethylene/propylene elastomer, inorganic filler and the optional nucleating agent can be mixed, in particular melt blended, according to any conventional procedure known in the art.

The polyolefin compositions of the present invention are preferably produced by combining heterophasic propylene copolymers, the ethylene/propylene elastomer, the inorganic filler, the optional alpha-nucleating agent and any additional additives, like pigments, stabilisers, processing aids, in a melt mixing device.

Melt mixing devices suited for this process are discontinuous and continuous kneaders, twin screw extruders and single screw extruders with special mixing sections and co-kneaders. The residence time must be chosen such that a sufficiently high degree of homogenisation is achieved.

### Measurement methods

### XCS

Xylene cold solubles are determined at 23 °C according ISO 6427. Xylene solubles are defined as the percent by weight that stays in solution after the polymer sample is dissolved in hot xylene and the solution is allowed to cool to 23 °C.

### MFR

The melt flow rates were measured with a load of 2.16 kg at 230 °C for polypropylene and the inventive polyolefin compositions of the examples. The melt flow rate is measured with a load of 2.16 kg at 190 °C for the ethylene/alpha-olefin elastomers, unless indicated otherwise. The melt flow rate is that quantity of polymer in grams which the test apparatus standardised to ISO 1133 extrudes within 10 minutes at a temperature of 230 °C or 190 °C under a load of 2.16 kg, unless indicated otherwise.

### Flexural test

Flexural tests are performed according to ISO 178:2001 at +23 °C on injection moulded samples of 80x10x4 mm³ prepared by injection moulding in line with ISO 1873-2. The flexural modulus (E-modulus) was calculated from the linear part of said flexural test results.

### Intrinsic Viscosity

Intrinsic Viscosity was measured according to DIN ISO 1628-1 (October 1999) in Tetralin at 135 °C.

### Density

Density was determined according to ISO 1183.

### NMR-spectroscopy measurements:

The comonomer content was determined by quantitative nuclear magnetic resonance (¹³C-NMR) spectroscopy after basic assignment (e.g. "NMR Spectra of Polymers and Polymer Additives", A. J. Brandolini and D. D. Hills, 2000, Marcel Dekker, Inc. New York). Experimental parameters were adjusted to ensure measurement of quantitative spectra for this specific task (e.g. "200 and More NMR Experiments: A Practical Course", S. Berger and S. Braun, 2004, Wiley-VCH, Weinheim). Quantities were calculated using simple corrected ratios of the signal integrals of representative sites in a manner known in the art.

### Heat Deflection Temperature (HDT):

The HDT was determined on injection molded test specimens of 80x10x4 mm³ prepared according to ISO 1873-2 and stored at +23°C for at least 96 hours prior to measurement. The test was performed on flatwise supported specimens according to ISO 75, condition B, with a nominal surface stress of 0.45 MPa.

### Particle size

Median particle size D₅₀ and top cut (D₉₅) are determined by laser diffraction according to ISO 13320-1:1999.

### Flow marks

The tendency to show flow marks was examined with a method as described below. This method is described in detail in WO 2010/149529.

An optical measurement system, as described by Sybille Frank et al. in PPS 25 Intern. Conf. Polym. Proc. Soc 2009 or Proceedings of the SPIE, Volume 6831, pp 68130T-68130T-8 (2008) was used for characterizing the surface quality.
This method consists of two aspects:

### 1. Image recording:

The basic principle of the measurement system is to illuminate the plates with a defined light source (LED) in a closed environment and to record an image with a CCD-camera system.

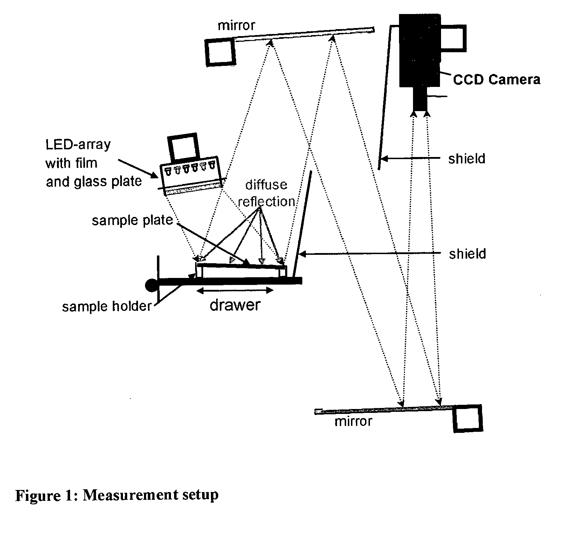

A schematic setup is given in Figure 1.

### 2. Image analysis:

The specimen is floodlit from one side and the upwards reflected portion of the light is deflected via two mirrors to a CCD-sensor. The such created grey value image is analyzed in lines. From the recorded deviations of grey values the mean square error (MSE) is calculated allowing a quantification of surface quality, i.e. the larger the MSE value the more pronounced is the surface defect.
Generally, for one and the same material, the tendency to flow marks increases when the injection speed is increased.

For this evaluation plaques 210x148x3mm³ with grain VW K50 and a filmgate of 1.4 mm were used and were produced with five different injection speeds using screw speeds of 57, 50, 35, and 17 mm/sec.
Further conditions:
Melt temperature: 240°C
Mould temperature 30°C
Dynamic pressure: 10 bar hydraulic

The smaller the MSE value is at a certain injection speed, the smaller is the tendency for flow marks.

### Number average molecular weight (Mₙ), weight average molecular weight (M_{w}) and molecular weight distribution (MWD)

are determined by Gel Permeation Chromatography (GPC) according to the following method:

The weight average molecular weight Mw and the molecular weight distribution (MWD = Mw/Mn wherein Mn is the number average molecular weight and Mw is the weight average molecular weight) is measured by a method based on ISO 16014-1:2003 and ISO 16014-4:2003. A Waters Alliance GPCV 2000 instrument, equipped with refractive index detector and online viscosimeter was used with 3 x TSK-gel columns (GMHXL-HT) from TosoHaas and 1,2,4-trichlorobenzene (TCB, stabilized with 200 mg/L 2,6-Di tert butyl-4-methyl-phenol) as solvent at 145 °C and at a constant flow rate of 1 mL/min. 216.5 µL of sample solution were injected per analysis. The column set was calibrated using relative calibration with 19 narrow MWD polystyrene (PS) standards in the range of 0.5 kg/mol to 11 500 kg/mol and a set of well characterized broad polypropylene standards. All samples were prepared by dissolving 5 - 10 mg of polymer in 10 mL (at 160 °C) of stabilized TCB (same as mobile phase) and keeping for 3 hours with continuous shaking prior sampling in into the GPC instrument.

### Examples

The following materials were used:
Polymer 1: Heterophasic propylene copolymer having an MFR of 11 g/10 min, with 65 wt% of a propylene homopolymer matrix (MFR = 55 g/10 min) and 35 wt% of an ethylene-propylene rubber. XCS content is 35 wt%. IV of XCS is 2.5 dl/g. Ethylene content of XCS is 38 wt%. Polymer 1 further contains 0.1 wt% Pentaerythrityl-tetrakis(3-(3',5'-di-tert. butyl-4-hydroxyphenyl)-propionate and 0.1 wt% Tris (2,4-di-t-butylphenyl) phosphite and 0.05 wt% calcium stearate.
Polymer 2: Heterophasic propylene copolymer having an MFR of 70 g/10 min, with 80 wt% of a propylene homopolymer matrix (MFR = 160 g/10 min) and 20 wt% of an ethylene-propylene rubber. XCS content is 20 wt%. IV of XCS is 2.2 dl/g. Ethylene content of XCS is 36 wt%. The heterophasic copolymer contains 35 ppm pVCH as polymeric nucleating agent. Polymer 2 further contains 0.05 wt% Pentaerythrityl-tetrakis(3-(3',5'-di-tert. butyl-4-hydroxyphenyl)-propionate and 0.05 wt% Tris (2,4-di-t-butylphenyl) phosphite and 0.25 wt% of glyceryl monostearate.
Filler: Talc, Jetfine 3CA, commercially available from Luzenac. Jetfine 3CA has a D₅₀ of 3.9 µm, a topcut (D₉₅) of 7.8 µm, both calculated from the particle size distribution measured by laser diffraction according to ISO 13320-1:1999 and a screen residue (determined by Alpine Airjet) of max. 0.05 % of particles > 15 µm.
EP: ethylene/propylene copolymer having an MFR (230 °C, 2,16 kg) of 3 g/10 min and a density of 873 kg/m³. EP is commercially available as Dutral PM 8278 from Polimeri Europa.
EB 1: ethylene-1-butene copolymer having an MFR (190 °C, 2.16 kg) of 5.0 g/10 min and a density of 865 kg/m³. EB 1 is available as Engage 7447 from The Dow Chemical Company.
EB 2: ethylene-1-butene copolymer having an MFR (190 °C, 2.16 kg) of 1.2 g/10 min and a density of 862 kg/m³. EB 2 is available as Engage 7467 from The Dow Chemical Company.

**Table 1 (example compositions)**

| | **unit** | **CE1** | **CE2** | **IE1** |
|---|---|---|---|---|
| **Polymer 1** | [wt%] | 30.0 | 30.0 | 30.0 |
| **Polymer 2** | [wt%] | 35.0 | 35.0 | 35.0 |
| **EP** | [wt%] | - | - | 12.0 |
| **EB 1** | [wt%] | 12.0 | - | - |
| **EB 2** | [wt%] | - | 12.0 | - |
| **Filler** | [wt%] | 20.0 | 20.0 | 20.0 |

| | | | | |
|---|---|---|---|---|
| Rest to 100 wt% are additives, like antioxidants and pigments (e.g. Carbon black) | | | | |

**Table 2 (properties of example compositions)**

| **Property** | **unit** | **CE1** | **CE2** | **IE1** |
|---|---|---|---|---|
| **MFR** | g/10min | 20.6 | 18.4 | 19.9 |
| **Flexural Modulus** | MPa | 1850 | 1914 | 2084 |
| **HDT B @ 0.45 MPa** | °C | 104.3 | 104.7 | 108.5 |
| **MSE** | | 11.2 | 7.2 | 2.9 |
| **Screw speed mm/s** | 57 | | | |
| **MSE** | | 6.8 | 5.9 | 2.4 |
| **Screw speed mm/s** | 50 | | | |
| **MSE** | | 5.4 | 3.4 | 2.1 |
| **Screw speed mm/s** | 35 | | | |
| **MSE** | | 3.2 | 3.2 | 1.8 |
| **Screw speed mm/s** | 17 | | | |

It can be seen that for the inventive example IE the melt flow rate, the modulus and the heat deflection temperature is comparable than in the comparative examples CE1 and CE2. Moreover, the inventive composition shows a significantly smaller tendency to exhibit flow marks especially at high injection speeds.

## Claims

1. Polyolefin composition comprising
a. 35 - 90 wt%, based on the weight of the polyolefin composition, of a heterophasic polypropylene composition comprising
i. 10 - 50 wt%, based on the weight of the heterophasic polypropylene composition, of a first polypropylene (PP 1) having an MFR₂ measured according to ISO 1133 of from 30 - 80 g/10 min (230 °C, 2.16 kg),
ii. 20 - 65 wt%, based on the weight of the heterophasic polypropylene composition, of a second polypropylene (PP2) having an MFR₂ measured according to ISO 1133 of from 100 - 250 g/10 min (230 °C, 2.16 kg),
iii. 5 - 30 wt%, based on the weight of the heterophasic polypropylene composition of a first xylene cold soluble fraction (XS 1) measured with ISO 6427 having an intrinsic viscosity IV_{XS1} of 2.0 - 3.0 dl/g, (measured with DIN ISO 1628-1) iv. 5 - 25 wt%, based on the weight of the heterophasic polypropylene composition of a second xylene cold soluble (XS2) fraction having an intrinsic viscosity IV_{XS2} of 1.5 - 2.8 dl/g,
with the proviso that IV_{XS1} ≠ IV_{XS2},
b. 5 - 40 wt%, based on the weight of the polyolefin composition, of an inorganic filler, and
c. 5 - 25 wt%, based on the weight of the polyolefin composition, of an ethylene/propylene elastomer.

2. Polyolefin composition according to claim 1, wherein the ethylene/propylene elastomer has a density of from 865 - 881 kg/m³ (measured with ISO 1183)

3. Polyolefin composition according to claims 1 or 2, wherein the ethylene/propylene elastomer has an MFR₂ measured according to ISO 1133 of from 1 - 7 g/10 min (230 °C, 2,16 kg) and/or a polydispersity index (PDI) of >6.

4. Polyolefin composition according to any one of the preceding claims, wherein the inorganic filler is selected from the group consisting of talc and wollastonite.

5. Polyolefin composition according to any one of the preceding claims, wherein the MFR₂ of the polyolefin composition measured according to ISO 1133 is from 5.0 - 50 g/10 min (230 °C, 2.16 kg).

6. Polyolefin composition according to any one of the preceding claims, wherein the polyolefin composition further contains at least one alpha-nucleating agent.

7. Polyolefin composition according to claim 6, wherein the at least one alpha-nucleating agent is selected from the group consisting of aluminum hydroxy-bis[2,4,8,10-tetrakis( 1,1-dimethylethyl)-6-hydroxy-12H-dibenzo-[d,g]-dioxa-phosphocin-6-oxidato] containing nucleating agents, sodium-2,2'-methylene-bis(4,6-di-t-butylphenyl)phosphate, aluminium-hydroxy-bis[2,2'-methylene-bis(4,6-di-t-butylphenyl)-phosphate], sorbitol based nucleating agents and polymeric nucleating agents selected from the group consisting of vinylcycloalkane polymers and vinylalkane polymers.

8. Polyolefin composition according to claim 7, **characterized in that** the at least one alpha nucleating agent is a polymeric nucleating agent selected from the group consisting of vinylcycloalkane polymers and vinylalkane polymers.

9. Polyolefin composition according to any one of claims 1 to 8, wherein at least one or both of the first polypropylene (PP1) and the second polypropylene (PP2) is a propylene homopolymer.

10. Moulded article comprising a polyolefin composition according to any one of the claims 1 to 9.

11. Moulded article according to claim 10, **characterised in that** it is an injection moulded article.

## Patentansprüche

1. Polyolefin-Zusammensetzung, umfassend
a. 35 - 90 Gew.-%, bezogen auf das Gewicht der Polyolefin-Zusammensetzung, einer heterophasischen Polypropylen-Zusammensetzung, umfassend
i. 10 - 50 Gew.-%, bezogen auf das Gewicht der heterophasischen Polypropylen-Zusammensetzung, eines ersten Polypropylens (PP1) mit einer MFR₂, gemessen gemäß ISO 1133, von 30 - 80 g/10 min (230°C, 2,16 kg),
ii. 20 - 65 Gew.-%, bezogen auf das Gewicht der heterophasischen Polypropylen-Zusammensetzung, eines zweiten Polypropylens (PP2) mit einer MFR₂, gemessen gemäß ISO 1133, von 100 - 250 g/10 min (230°C, 2,16 kg),
iii. 5 - 30 Gew.-%, bezogen auf das Gewicht der heterophasischen Polypropylen-Zusammensetzung einer ersten in kaltem Xylol löslichen Fraktion (XS1) (gemessen mit ISO 6427) mit einer Grenzviskosität IV_{XS1} von 2,0 - 3,0 dl/g (gemessen mit DIN ISO 1628-1),
iv. 5 - 25 Gew.-%, bezogen auf das Gewicht der heterophasischen Polypropylen-Zusammensetzung einer zweiten in kaltem Xylol löslichen Fraktion (XS2) mit einer Grenzviskosität IV_{XS2} von 1,5 - 2,8 dl/g,
mit der Maßgabe, dass IV_{XS1} ≠ IV_{XS2},
b. 5 - 40 Gew.-%, bezogen auf das Gewicht der Polyolefin-Zusammensetzung, eines anorganischen Füllstoffs, und
c. 5 - 25 Gew.-%, bezogen auf das Gewicht der Polyolefin-Zusammensetzung, eines Ethylen / Propylen-Elastomers.

2. Polyolefin-Zusammensetzung nach Anspruch 1, wobei das Ethylen / Propylen-Elastomer eine Dichte von 865 - 881 kg/m³ (gemessen mit ISO 1183) aufweist.

3. Polyolefin-Zusammensetzung nach Ansprüchen 1 oder 2, wobei das Ethylen / Propylen-Elastomer eine MFR₂, gemessen gemäß ISO 1133, von 1 - 7 g/10 min (230°C, 2,16 kg) und/oder einen Polydispersitäts-Index (PDI) von > 6 aufweist.

4. Polyolefin-Zusammensetzung nach einem der vorangehenden Ansprüche, wobei der anorganische Füllstoff aus der Gruppe, bestehend aus Talkum und Wollastonit, ausgewählt ist.

5. Polyolefin-Zusammensetzung nach einem der vorangehenden Ansprüche, wobei die MFR₂ der Polyolefin-Zusammensetzung, gemessen gemäß ISO 1133, von 5,0 - 50 g/10 min (230°C, 2,16 kg) ist.

6. Polyolefin-Zusammensetzung nach einem der vorangehenden Ansprüche, wobei die Polyolefin-Zusammensetzung weiterhin mindestens ein alpha-Keimbildungsmittel enthält.

7. Polyolefin-Zusammensetzung nach Anspruch 6, wobei das mindestens eine alpha-Keimbildungsmittel aus der Gruppe, bestehend aus Aluminium-hydroxy-bis-[2, 4, 8, 10-tetrakis-(1,1-dimethylethyl)-6-hydroxy-12H-dibenzo-[d,g]-dioxa-phosphocin-6-oxidato] enthaltenden Keimbildungsmitteln, Natrium-2, 2'-methylen-bis (4, 6-di-t-butylphenyl)phosphat, Aluminium-hydroxy-bis [2,2'-methylen-bis (4, 6-di-t-butylphenyl)-phosphat], auf Sorbit basierenden Keimbildungsmitteln und polymeren Keimbildungsmitteln, ausgewählt aus der Gruppe, bestehend aus Vinylcycloalkan-Polymeren und Vinylalkan-Polymeren, ausgewählt ist.

8. Polyolefin-Zusammensetzung nach Anspruch 7, **dadurch gekennzeichnet, dass** das mindestens eine alpha-Keimbildungsmittel ein polymeres Keimbildungsmittel ist, ausgewählt aus der Gruppe, bestehend aus Vinylcycloalkan-Polymeren und Vinylalkan-Polymeren.

9. Polyolefin-Zusammensetzung nach einem der Ansprüche 1 bis 8, wobei mindestens eines oder beide von dem ersten Polypropylen (PP1) und dem zweiten Polypropylen (PP2) ein Propylen-Homopolymer ist.

10. Form-Gegenstand, umfassend eine Polyolefin-Zusammensetzung nach einem der Ansprüche 1 bis 9.

11. Form-Gegenstand nach Anspruch 10, **dadurch gekennzeichnet, dass** er ein Spritz-Form-Gegenstand ist.

## Revendications

1. Composition de polyoléfine comprenant
a. de 35 à 90 % en poids, par rapport au poids de la composition de polyoléfine, d'une composition de polypropylène hétérophasique comprenant
i. 10 à 50 % en poids, par rapport au poids de la composition de polypropylène hétérophasique, d'un premier polypropylène (PP1) présentant un MFR₂, mesuré conformément à la norme ISO 1133, de 30 à 80 g/10 min (230°C, 2,16 kg),
ii. 20 à 65 % en poids, par rapport au poids de la composition de polypropylène hétérophasique, d'un deuxième polypropylène (PP2) présentant un MFR₂, mesuré conformément à la norme ISO 1133, de 100 à 250 g/10 min (230°C, 2,16 kg),
iii. 5 à 30 % en poids, par rapport au poids de la composition de polypropylène hétérophasique, d'une première fraction soluble dans le xylène froid (XS1) (mesurée conformément à la norme ISO 6427), présentant une viscosité intrinsèque IV_{XS1}, mesurée conformément à la norme DIN ISO 1628-1, de 2,0 à 3,0 dl/g,
iv. 5 à 25 % en poids, par rapport au poids de la composition de polypropylène hétérophasique, d'une deuxième fraction soluble dans le xylène froid (XS2) présentant une viscosité intrinsèque IV_{XS2} de 1,5 à 2,8 dl/g,
à la condition que IV_{XS1} ≠ IV_{XS2},
b. 5 à 40 % en poids, par rapport au poids de la composition de polyoléfine, d'une charge inorganique, et
c. 5 à 25 % en poids, par rapport au poids de la composition de polyoléfine, d'un élastomère d'éthylène/ propylène.

2. Composition de polyoléfine selon la revendication 1, dans laquelle l'élastomère d'éthylène/ propylène présente une masse volumique, mesurée conformément à la norme ISO 1183, de 865 à 881 kg/m³.

3. Composition de polyoléfine selon la revendication 1 ou 2, dans laquelle l'élastomère d'éthylène/propylène présente un MFR₂, mesuré conformément à la norme ISO 1133, de 1 à 7 g/10 min (230°C, 2,16 kg), et/ou un indice de polydispersité (PDI) > 6.

4. Composition de polyoléfine selon l'une quelconque des revendications précédentes, dans laquelle la charge inorganique est choisie dans l'ensemble constitué par le talc et la wollastonite.

5. Composition de polyoléfine selon l'une quelconque des revendications précédentes, dans laquelle le MFR₂ de la composition de polyoléfine, mesuré conformément à la norme ISO 1133, est de 5,0 à 50 g/10 min (230°C, 2,16 kg).

6. Composition de polyoléfine selon l'une quelconque des revendications précédentes, laquelle composition de polyoléfine contient en outre au moins un agent d'α-nucléation.

7. Composition de polyoléfine selon la revendication 6, dans laquelle l'au moins un agent d'α-nucléation est choisi dans l'ensemble constitué par les agents de nucléation contenant de l'hydroxybis[2,4,8,10-tétrakis(1,1-diméthyléthyl)-6-hydroxy-12H-dibenzo[d,g]-dioxaphosphocine-6-oxydate] d'aluminium, le 2,2'-méthylènebis(4,6-di-t-butylphényl)phosphate de sodium, l'hydroxybis[2,2'-méthylènebis(4,6-di-t-butylphényl)-phosphate] d'aluminium, les agents de nucléation à base de sorbitol et les agents de nucléation polymères choisis dans l'ensemble constitué par les polymères de vinylcycloalcane et les polymères de vinylalcane.

8. Composition de polyoléfine selon la revendication 7, **caractérisée en ce que** l'au moins un agent d'α-nucléation est un agent de nucléation polymère choisi dans l'ensemble constitué par les polymères de vinylcycloalcane et les polymères de vinylalcane.

9. Composition de polyoléfine selon l'une quelconque des revendications 1 à 8, dans laquelle au moins l'un ou les deux parmi le premier polypropylène (PP1) et le deuxième polypropylène (PP2) est/sont un/des homopolymère(s) de propylène.

10. Article moulé comprenant une composition de polyoléfine selon l'une quelconque des revendications 1 à 9.

11. Article moulé selon la revendication 10, **caractérisé en ce qu'**il s'agit d'un article moulé par injection.
